**Europäisches Patentamt**

(19) **European Patent Office**

**Office européen des brevets**

(11) Numéro de publication: **0 025 399**
**B1**

(12) **FASCICULE DE BREVET EUROPEEN**

(45) Date de publication du fascicule du brevet:
**16.03.83**

(21) Numéro de dépôt: **80401276.3**

(22) Date de dépôt: **05.09.80**

(51) Int. Cl.³: **B 60 T 3/00**

(54) **Cale indépendante pour roue de véhicule.**

(30) Priorité: **07.09.79 FR 7922489**

(43) Date de publication de la demande:
**18.03.81 Bulletin 81/11**

(45) Mention de la délivrance du brevet:
**16.03.83 Bulletin 83/11**

(84) Etats contractants désignés:
**AT BE CH DE GB IT LI NL SE**

(56) Documents cités:
**US-A-1 847 679**
**US-A-2 475 111**
**US-A-2 829 738**

(73) Titulaire: **SOCIETE NOUVELLE DES ATELIERS DE VENISSIEUX, 4 ter avenue Hoche, F-75008 Paris (FR)**

(72) Inventeur: **Renard, Michel, 10 rue Louis Aulagne, F-69200 Venissieux (FR)**

(74) Mandataire: **Dupuy, Louis et al, CREUSOT-LOIRE 15 rue Pasquier, F-75383 Paris Cedex 8 (FR)**

ACTORUM AG

## Cale indépendante pour roue de véhicule

La présente invention concerne une cale indépendante pour roue de véhicule, destinée à être placée sur un sol tourmenté, tel qu'un plancher ondulé de wagon porte-automobiles.

Les cales indépendantes utilisées actuellement sur les planchers de wagons porte-automobiles sont généralement du type à palette d'appui articulée, telles que décrites dans le FR-A N° 1510029 de la titulaire. L'utilisation de cales de ce type est en particulier très avantageuse dans le cas de wagons porte-automobiles à deux étages. En effet, dans le cas de tels wagons, l'utilisation de cales rigides, telles que des cales en forme de toit de maisonnette constituées par un assemblage de tubes, entraîne, dans le cas de chocs violents, un risque d'endommagement du toit des véhicules placés sur le plancher inférieur, lors d'une montée accidentelle des roues de ceux-ci sur ces cales. Dans le cas des cales à palette articulée, lors d'un arrêt brusque du véhicule porteur par exemple, le pneumatique de l'automobile vient pousser la palette qui écrase à son tour des butées progressives en caoutchouc, offrant ainsi une résistance au recul du véhicule, celui-ci ne se surélevant pas comme dans le cas des cales rigides. Ce type de cale connu présente néamoins quelques inconvénients:

— la cale doit être obligatoirement placée en appui sur le pneumatique du véhicule à caler en comprimant légèrement les butées élastiques, afin d'éviter que, suite aux vibrations engendrées par le roulement du véhicule porteur, ladite cale ne puisse quitter sa place; cela implique un soin particulier du personnel exploitant, de sorte que, dans la pratique, il arrive souvent que des cales, mal positionnées au départ, ne sont plus en face des pneumatiques lors d'un choc;

— la conception de ce type de cale nécessite la réalisation de plusieurs pièces mécaniques, ce qui entraîne des coûts de fabrication et d'entretien élevés.

La cale de l'invention présente les avantages des cales à palette articulée selon le FR-A N° 1510029, sans en présenter les inconvénients ci-dessus mentionnés. Elle est du type muni d'un dispositif permettant de bloquer sa partie arrière dans un creux ou protubérance du sol, et est caractérisée en ce qu'elle est constituée par une ou plusieurs tiges pliées et assemblées de manière à comporter, outre la portion de blocage arrière:

— une partie en forme de portique à deux brins décalés et destinés à servir, l'un après l'autre, d'appuis pour la roue à caler;

— une partie agencée, par exemple par pliage ou enroulement, de manière à donner à la partie précédente une flexibilité longitudinale élastique;

— une partie avant prolongeant la partie précédente et constituée de deux branches faisant office de pince destinée à enfourcher la roue à caler et reposant sur le sol par sa partie inférieure;

— une partie axiale dont la partie avant repose sur le sol de manière à être écrasée par la roue à caler, et dont la partie arrière est relevée de manière à servir de butée arrière positive aux deux brins décalés du portique.

L'invention sera mieux comprise à l'aide de la description suivante d'un exemple de réalisation d'une cale pour wagon porte-automobiles, en référence aux dessins annexés dans lesquels:

— la fig. 1 est une vue en perspective de la cale selon l'invention;
— la fig. 2 schématise le positionnement de la cale de la fig. 1 par rapport à la roue à caler;
— la fig. 3 schématise le comportement en cas de choc de la cale de la fig. 1.

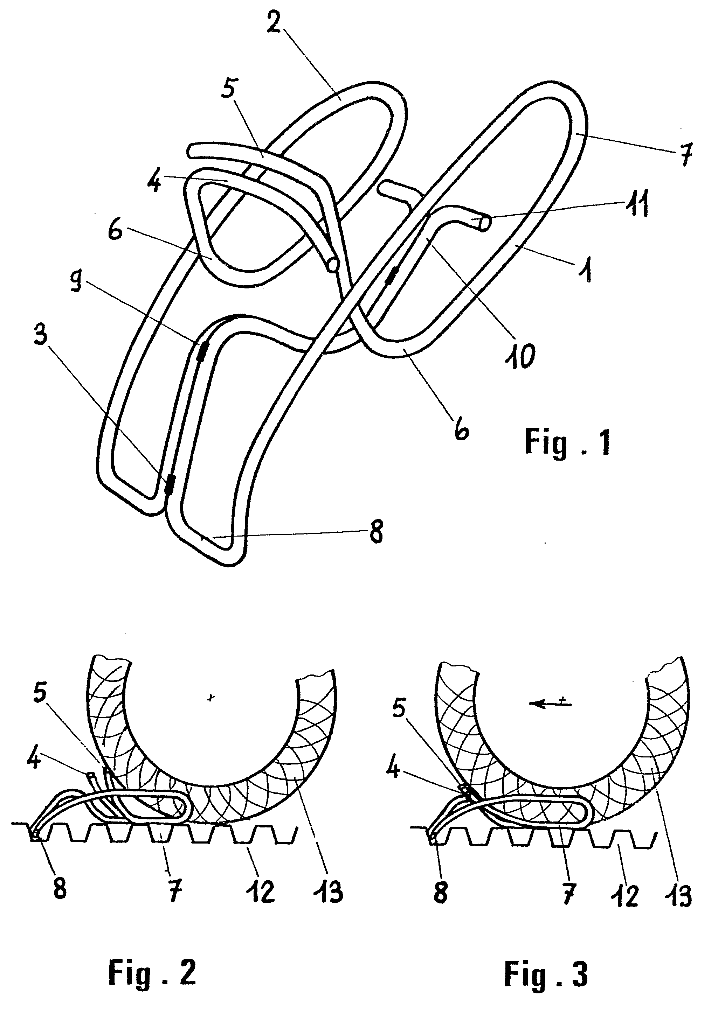

En se reportant à la fig. 1, la cale selon l'invention représentée est constituée de deux tiges d'acier 1 et 2 assemblées par points de soudure 3 après avoir été pliées de manière à obtenir la forme représentée sur le dessin et présentant:

— une partie en forme de portique à deux brins transversaux et séparés 4 et 5, le brin 5 étant plus haut que le brin 4 et en avant par rapport à celui-ci, ces deux brins étant destinés à constituer la zone d'appui de la roue à caler;

— une partie 6 pliée en arc de cercle, prenant appui sur le plancher, et destinée à donner aux brins 4 et 5 une flexibilité longitudinale élastique;

— une partie avant 7 repliée de façon à:
● constituer les deux branches d'une pince destinée à enfourcher le pneumatique de la roue à caler et à maintenir ainsi la cale contre ledit pneumatique;
● constituer une partie flexible permettant d'augmenter la flexibilité longitudinale élastique déjà obtenue par la partie précédente 6;
● renvoyer les deux tiges (1, 2) vers la partie arrière 8 de la cale;

— une partie arrière transversale 8 destinée à venir prendre appui dans le fond d'une onde de plancher du wagon porte-automobiles;

— une partie axiale arrière 9 pliée de manière à former butée positive d'arrêt aux brins 4 et 5 lorsqu'ils seront écrasés par le pneumatique, ainsi qu'à arrêter ledit pneumatique;

— une partie axiale avant 10 prenant appui sur le plancher et destinée à être écrasée par le pneumatique de la roue à caler de manière à empêcher le basculement de la cale vers l'arrière lors de son fonctionnement;

— une partie extrême avant 11 repliée par exemple transversalement de manière à éviter d'endommager le pneumatique lorsqu'il roulera du plancher du wagon sur la partie axiale avant 10.

La fig. 2 montre la cale de la fig. 1 en place sur un plancher ondulé 12 et devant un pneumatique 13 d'automobile. Comme on le voit sur le dessin, la partie avant 7 enserrant le pneumatique 13 maintient la cale contre celui-ci, de préférence en contact avec le brin 5 et, de manière connue en soi, la partie arrière 8 bloque la cale dans une onde du plancher 12. Par ailleurs, comme on l'a dit précédemment, le pneu 13 écrase la partie axiale avant (10, 11).

Comme on le voit sur la fig. 3, dans le cas d'un choc provoqué par exemple par l'arrêt du wagon porte-automobiles, le pneumatique 13, se déplaçant vers la gauche comme indiqué par la flèche, vient percuter la partie 5, qui fléchit, puis la partie 4, qui fléchit à son tour. En cas de choc violent, les parties 4 et 5 viennent buter sur la partie centrale arrière 9 qui arrête alors le pneumatique 13.

En cas de choc accidentel exceptionnellement violent par ailleurs, le pneumatique 13 pourra franchir complètement la cale par sa partie centrale arrière 9 sans dommage pour ladite cale.

L'invention trouve son application la plus intéressante pour le transport ferroviaire de véhicules automobiles.

## Revendications

1. Cale indépendante pour roue de véhicule, destinée à être placée sur un sol tourmenté tel qu'un plancher ondulé de wagon porte-automobiles, ladite cale étant munie d'un dispositif permettant de bloquer sa partie arrière dans un creux ou protubérance dudit sol, caractérisée en ce qu'elle est constituée par une ou plusieurs tiges (1, 2) pliées et assemblées de manière à comporter, outre la partie de blocage arrière (8):
— une partie centrale en forme de portique à deux brins transversaux décalés (5, 4) et destinés à servir, l'un après l'autre, d'appuis pour la roue à caler;
— une partie centrale (6) agencée, par exemple par pliage ou enroulement, de manière à donner à la partie précédente une flexibilité longitudinale élastique;
— une partie avant (7) prolongeant la partie précédente (6) et constituée de deux branches faisant office de pince destinée à enfourcher la roue à caler et reposant sur le sol par sa partie inférieure;
— une partie axiale (9, 10) dont la partie avant (10) repose sur le sol de manière à être écrasée par la roue à caler et dont la partie arrière (9) est relevée de manière à servir de butée arrière positive aux deux brins décalés (5, 4) du portique.

2. Cale selon la revendication 1, caractérisée en ce que sa partie axiale avant (10) se termine par une partie extrême repliée (11).

## Patentansprüche

1. Unabhängiger Bremsblock bzw. Radschuh für ein Fahrzeugrad, der dazu bestimmt ist, auf einem unebenen Boden wie z.B. dem gewellten Boden eines Kraftfahrzeugtransportwaggons, angeordnet zu werden, wobei der Bremsblock bzw. Radschuh mit einer Vorrichtung versehen ist, welche die Verriegelung seines hinteren Abschnittes in einer Vertiefung oder Erhebung des Bodens zulässt, dadurch gekennzeichnet, dass der Bremsblock oder Radschuh aus einer oder mehreren Stangen (1, 2) gebildet ist, die so gebogen und zusammengebaut sind, dass sie ausser dem hinteren Verriegelungsabschnitt (8) umfassen:
— einen mittleren Abschnitt in Form einer Brücke mit zwei in Querrichtung verlaufenden, voneinander abweichenden Abschnitte (5, 4), die dazu bestimmt sind, einer nach dem anderen als Abstützung für das zu blockierende Rad zu dienen;
— einen zentralen Abschnitt (6), der z.B. durch Biegen oder Aufrollen dem vorgeschalteten Abschnitt eine in Längsrichtung wirkende elastische Biegsamkeit erteilt;
— einen vorderen Abschnitt (7), der den vorgeschalteten Abschnitt (6) verlängert und aus zwei Schenkeln besteht, die als Zange dienen, welche dazu bestimmt ist, das zu blockierende Rad gabelartig zu umgeben und mit seinem unteren Abschnitt auf dem Boden aufzurasten;
— einen axialen Abschnitt (9, 10), dessen vorderer Abschnitt (10) auf dem Boden so aufliegt, dass er von dem zu blockierenden Rad zusammengedrückt wird, und dessen hinterer Abschnitt (9) so hochgehoben ist, dass er als hinterer zwangsläufiger Anschlag für die beiden voneinander abweichenden Abschnitte (5, 4) der Brücke dient.

2. Bremsblock bzw. Radschuh nach Anspruch 1, dadurch gekennzeichnet, dass sein vorderer axialer Abschnitt (10) in einen zusammengebogenen Endabschnitt (11) ausläuft.

## Claims

1. Independent wedge for a vehicle wheel, intended to be placed on an uneven surface, such as a corrugated floor of a car-transporting railway truck, the said wedge being provided with a device making it possible to lock its rear part in a hollow or protuberance in the said surface, characterized in that it consists of one or more rods (1, 2) bent and joined together so as to comprise, apart from the rear locking part (8):
— a central part in the form of a porch with two offset transverse ribs (5, 4) intended to serve successively as supports for the wheel to be wedged;
— a central part (6) arranged, for example by bending or rolling, so as to give the above part elastic longitudinal flexibility;
— a front part (7) extending the above part (6) and consisting of two arms acting as a clamp intended to straddle the wheel to be wedged and resting on the surface by means of its lower part; and
— an axial part (9, 10), the front part (10) of which rests on the surface so as to be crushed by the wheel to be wedged, and the rear part (9) of which is raised so as to serve as a positive rear stop for the two offset ribs (5, 4) of the porch.

2. Wedge according to claim 1, characterized in that its front axial part (10) terminates in a bent-back end part (11).

Fig . 1

Fig . 2

Fig . 3